# EUROPÄISCHE PATENTSCHRIFT

(11) **EP 0 454 942 B1**
(45) Veröffentlichungstag und Bekanntmachung des Hinweises auf die Patenterteilung: **17.03.1993**
(21) Anmeldenummer: 91100665.8
(22) Anmeldetag: 21.01.1991
(51) Int. Cl.: B62D 27/02, B62D 23/00

(54) **Wagenkasten, insbesondere für Personenkraftwagen**
Vehicle body, particularly for a passenger car
Caisse de véhicule, en particulier pour voiture particulière

(30) Priorität: 28.04.1990 DE 4013784
(43) Veröffentlichungstag der Anmeldung: 06.11.1991
(73) Patentinhaber: Dr.Ing.h.c. F. Porsche Aktiengesellschaft, 70435 Stuttgart (DE)
(72) Erfinder: Wurl, Willi, W-7532 Niefern-Öschelbronn 1 (DE)

(56) Entgegenhaltungen:
- EP-A- 0 146 716
- DE-C- 947 677
- FR-A- 2 213 664
- GB-A- 659 155

## Beschreibung

Die Erfindung bezieht sich auf einen Wagenkasten, insbesondere für Personenkraftwagen gemäß dem Oberbegriff des Anspruchs 1.

Aus der gattungsbildenden DE-OS 33 46 986 ist ein Wagenkasten für einen Personenkraftwagen bekannt, wobei ein vorderer Längsträger der Aufbaustruktur über ein Knotenelement an den Schweller angeschlossen ist. Ferner ist ein aufrechter Türpfosten mit dem Knotenelement verbunden. Der vordere Längsträger, der Schweller und der Türpfosten werden durch Strangpreßprofile aus Leichtmetall gebildet, wogegen das Knotenelement als Gußteil aus Leichtmetall ausgebildet ist.

Um das Knotenelement leichter herstellen zu können, ist es nach oben hin offen ausgebildet und wird durch ein zusätzliches Schließteil verschlossen.

Aufgabe der Erfindung ist es, an einem Wagenkasten solche Vorkehrungen zu treffen, daß im Verbindungsbereich vorderer Längsträger - Schweller einerseits eine einfache, kostengünstige Montage erzielt wird und daß andererseits eine ausreichende Steifigkeit der Aufbaustruktur in diesem Bereich gewährleistet ist.

Erfindungsgemäß wird diese Aufgabe durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch die Anordnung von zwei miteinander verbindbaren Knotenelementen im Verbindungsbereich Vorderlängsträger - Schweller eine einfache, kostengünstige Montage der Aufbaustruktur erzielt wird. Das eine Knotenelement ist dabei fest mit dem hinteren Ende der vorderen Längsträger verbunden und ist einem vorgefertigten Vorderwagen zugeordnet. Das andere sich in Querrichtung erstreckende Knotenelement ist an den Schweller, den Boden und den Mitteltunnel angeschlossen, wodurch eine ausreichende Steifigkeit (Biegung und Torsion) im Verbindungsbereich vorderer Längsträger- Schweller und eine gute Krafteinleitung vom vorderen Längsträger in die angrenzende Aufbaustruktur erreicht wird.

Durch die Anordnung eines Getriebeträgers unterhalb des zweiten Knotenelementes und einer Befestigungsschraube werden die beiden Knotenelemente zusätzlich miteinander verschraubt. Ferner wird ein Pedal bzw. eine Pedallerie in einfacher Weise direkt am zweiten Knotenelement befestigt. Darüber hinaus ist in das zweite Knotenelement eine nischenförmige Aufnahme integriert, in die eine Gewindeplatte zur Befestigung eines Querlenkers einsetzbar ist. Die rinnenförmige Aufnahme am zweiten Knotenelement bewirkt eine selbsttätige Zentrierung des ersten Knotenelementes bei der Montage.

Ein Ausführungsbeispiel der Erfindung ist in der Zeichnung dargestellt und wird im folgenden näher erläutert.

Es zeigt:
Fig. 1 in perspektivischer Darstellung einen Teilbereich der tragenden Aufbaustruktur eines Personenkraftwagens,
Fig. 2 die tragende Aufbaustruktur desselben Personenkraftwagens im Übergangsbereich zwischen vorderen Längsträger und Schweller,
Fig. 3 einen vertikalen Längsschnitt durch den vorderen Längsträger und das erste Knotenelement entlang der Linie III-III der Fig. 2,
Fig. 4 einen vertikalen Längsschnitt durch das zweite Knotenelement und den Schweller entlang der Linie IV-IV der Fig. 2,
Fig. 5 eine perspektivische Darstellung des vorderen Längsträgers und der beiden Knotenelemente,
Fig. 6 einen Schnitt entlang der Linie VI-VI der Fig. 2,
Fig. 7 einen Schnitt entlang der Linie VII-VII der Fig. 2.

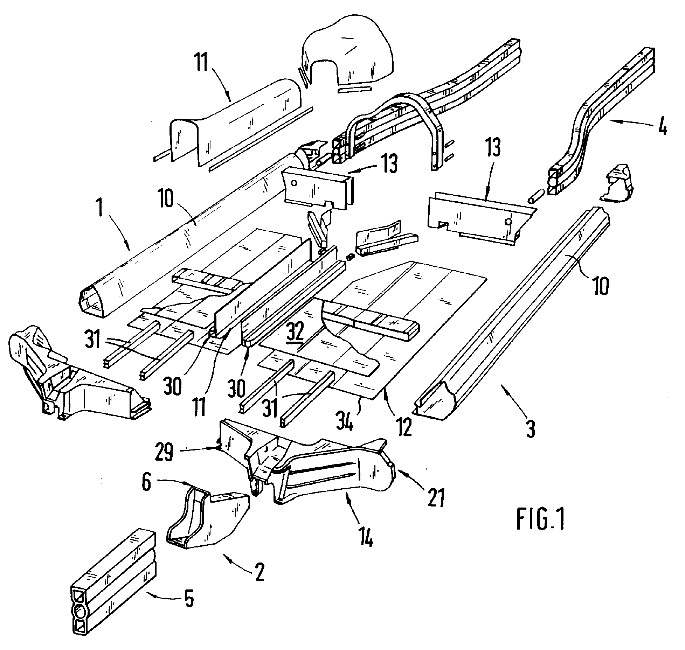

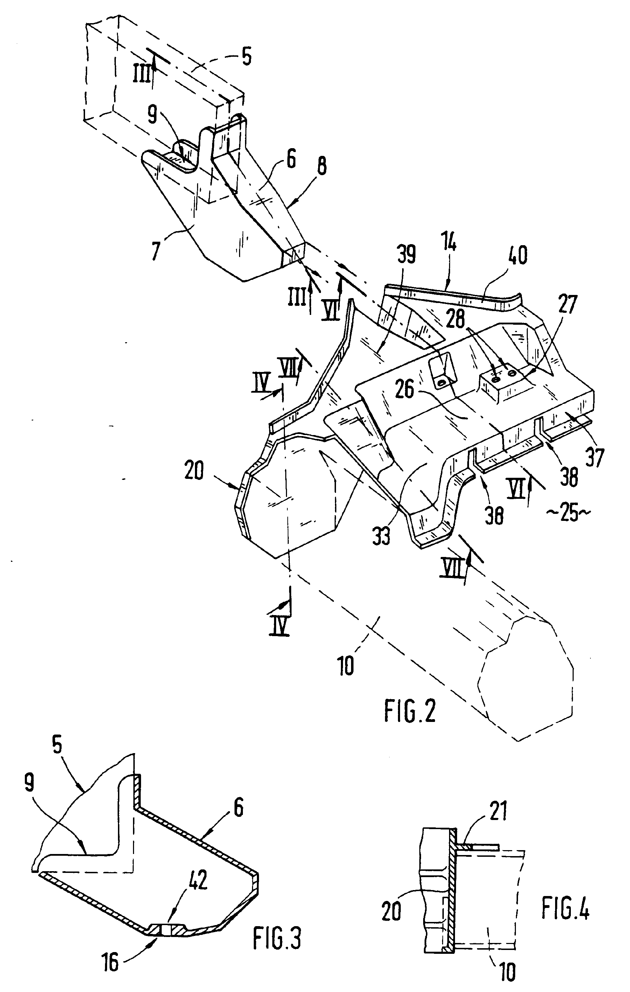

Fig. 1 zeigt in Explosionsdarstellung einen Teilbereich eines Wagenkastens 1 eines Personenkraftwagens. Der Wagenkasten 1 setzt sich im gezeigten Bereich aus einem Vorderwagen 2, einem Boden- oder Mittelteil 3 und einem Hinterwagen 4 zusammen. Der Vorderwagen 2, das Boden- oder Mittelteil 3 und der Hinterwagen 4 bilden vorgefertigte Baueinheiten, die bei der Montage des Wagenkastens 1 zusammengefügt werden. Der Vorderwagen 2 umfaßt zwei mit Abstand zueinander angeordnete vordere Längsträgern 5, die an ihren vorderen Enden in nicht näher dargestellter Weise über einen Querträger miteinander verbunden sind. An ihren hinteren Enden sind die vorderen Längsträger 5 in ersten Knotenelementen 6 aufgenommen und fest mit diesen verbunden. Dies kann durch Schweißen, Kleben, Schrauben, Nieten oder dgl. erfolgen. Die ersten, etwa schuhförmig ausgebildeten Knotenelemente 6 umgreifen den vorderen Längsträger 5 von unten, von hinten und von beiden Längsseiten her formschlüssig. Nach hinten hin sind die hohlkörperartig ausgebildeten Knotenelemente 6 allseitig geschlossen. Die beiden Längsseiten 7, 8 des Knotenelementes 6 sind im Verbindungsbereich mit dem vorderen Längsträger 5 bis 9 etwa L-förmig ausgespart (Fig. 2).

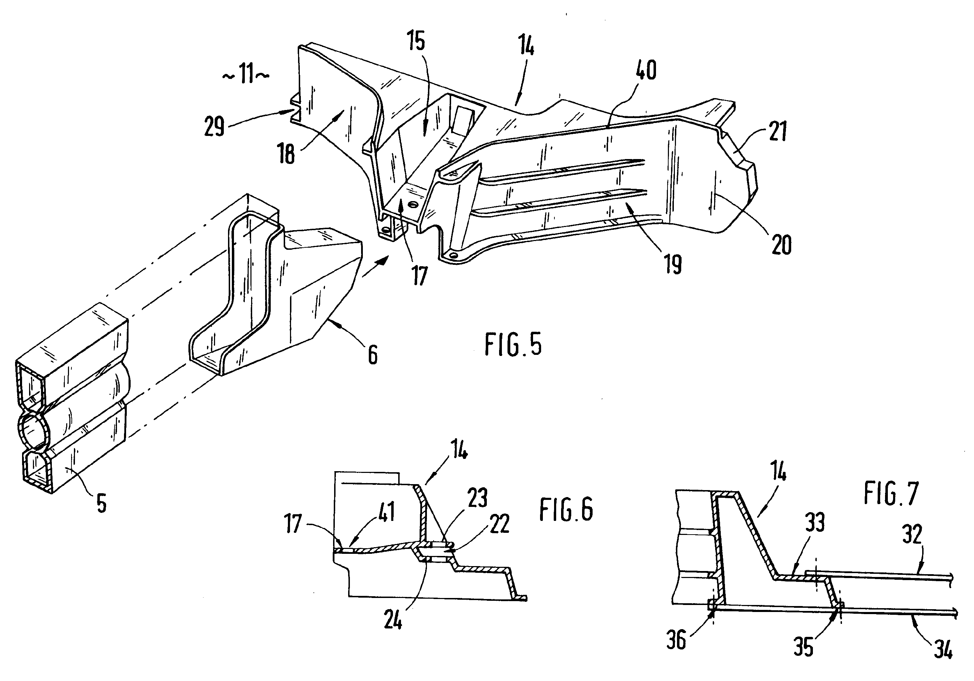

Das Boden- oder Mittelteil 3 setzt sich im wesentlichen aus zwei seitlich außenliegenden Schwellern 10, einem Mitteltunnel 11, einem Boden 12 und einem Sitzquerträger 13 zusammen. Ferner ist am vorderen Endbereich des Boden oder -Mittelteils 3 ein zweites, sich in Fahrzeugquerrichtung erstreckendes Knotenelement 14 vorgesehen, das mit dem Schweller 10, dem Boden 12 und dem Mitteltunnel 11 fest verbunden ist. Das zweite Knotenelement 14 weist eine sich in Verlängerung des vorderen Längsträgers 5 bzw. des ersten Knotenelementes 6 erstreckende rinnenförmige Aufnahme 15 auf, in die das erste Knotenelement 6 von oben bzw. von vorne her eingesetzt wird (Fig. 5). Zusätzlich erfolgt zwischen den beiden Knotenelementen 6, 14 eine Verbindung durch Schweißen, Kleben, Schrauben oder dgl. Bei zusammengefügten Knotenelementen (6, 14) liegt eine horizontale untere Begrenzungsfläche 16 des ersten Knotenelementes 6 an einer gleichgerichteten Fläche 17 des darunterliegenden zweiten Knotenelements 14 auf.

Die rinnenförmige Aufnahme 15 bewirkt eine selbsttätige Zentrierung des ersten Knotenelementes 8 in der Aufnahme 15, da sich die Aufnahme (15) in Querrichtung gesehen kontinuierlich nach unten hin verjüngt. (Ausformschräge). Beim zweiten Knotenelement 14 sind beiderseits der rinnenförmigen, längsgerichteten Aufnahme 15 schrägverlaufende, vertikale Wandabschnitte 18, 19 weggeführt, wobei der eine Wandabschnitt 18 zum Mitteltunnel 11 und der andere Wandabschnitt 19 in Richtung Schweller 10 verläuft. Der zuletzt genannte Wandabschnitt 19 mündet in eine endseitige Querwand 20, die den Schweller 10 verschließt. Am Wandabschnitt 19 sind örtlich horizontal verlaufende Versteifungsrippen vorgesehen. Ein abgestellter Rand 21 dieser Querwand 20 umgibt abschnittsweise einen Randbereich des Schwellers 10.

Ferner ist am zweiten Knotenelement 14 ein nischenförmiger Aufnahmeraum 22 vorgesehen, der in Höhenrichtung gesehen von zwei beabstandeten Stegen 23, 24 begrenzt wird. In diesen Aufnahmeraum 22 ist eine nicht näher dargestellte Gewindeplatte einschiebbar, an der ein unterhalb des zweiten Knotenelementes 14 angeordneter, ebenfalls nicht gezeigter Querlenker befestigbar ist.

Die Gewindeplatte ist vom Fahrgastraum her einsetzbar und verläuft etwa in Höhe der Fläche 17 der Aufnahme 15. Das zweite Knotenelement 14 weist auf der einen Fahrgastraum 25 zugekehrten Seite einen abgesetzten Fußraumabschnitt 26 auf. An einer horizontalen Fläche des stufenförmigen Fußraumabschnittes 26 wird direkt ein Pedal bzw. eine Pedallerie angeschraubt. Hierzu sind an einer sockelartigen Erhöhung 27 des Knotenelementes 14 zwei Gewindebohrungen 28 vorgesehen.

Das zweite Knotenelement 14 weist auf der dem Mitteltunnel 11 zugekehrten Seite einen U-förmigen Rand 29 auf, der einen Hohlprofilabschnitt 30 des Mitteltunnels 11 umschließt, wobei eine zusätzliche Verbindung zwischen dem Rand 29 und dem Hohlprofilabschnitt 30 vorgesehen sein kann (Schweißen, Kleben, Schrauben, Nieten oder dgl.).

Gemäß den Fig. 1 und 7 ist ein doppelwandiger Boden 12 mit örtlich angeordneten längsgerichteten Stegen 31 an das zweite Knotenelement 14 angeschlossen. Eine obere Bodenplatte 32 liegt an der horizontalen Fläche 33 des Knotenelementes 14 auf, wogegen sich eine untere Bodenplatte 34 an horizontalen Flanschen 35, 36 des Knotenelementes 14 abstützt und daran befestigt ist. Eine dem Fahrgastraum 25 zugekehrte stufenförmige Abstellung 37 ist im Bereich der längsgerichteten Stege 31 des Bodens 12 mit Aussparungen 38 versehen, so daß die Stege 31 bis an die aufrechten Wandabschnitte 18, 19 des Knotenelementes 14 herangeführt werden können und mit diesem fest verbunden sind. An der etwa horizontalen Oberseite 39 des Knotenelementes 14 ist örtlich ein vertikal nach oben abgestellter Steg 40 vorgesehen, an den eine nicht gezeigte querverlaufende Stirnwand und ein Radhaus der Aufbaustruktur anschließbar sind.

Unterhalb des zweiten Knotenelementes 14 ist ein nicht näher dargestellter querverlaufender Getriebeträger vorgesehen. Der Getriebeträger liegt an der Unterseite des zweiten Knotenelementes 14 an und wird durch eine vertikale Befestigungsschraube von unten gegen das zweite Knotenelement 14 gespannt. Die Befestigungsschraube ist durch eine Durchgangsöffnung 41 des zweiten Knotenelementes 14 hindurchgeführt und in eine Gewindebohrung 42 des darüberliegenden ersten Knotenelementes eingedreht. Somit erfolgt eine zusätzliche Verbindung zwischen den beiden Knotenelementen 6, 14. Die Gewindebohrung ist an der horizontalen Fläche 16 des Knotenelementes 6 angeordnet. Der vordere Längsträger 5, der Schweller 10 und der Mitteltunnel 11 werden durch hohlprofilartige Strangpreßprofile aus Leichtmetall gebildet, wogegen die Knotenelemente als Gußteile aus Leichtmetall ausgebildet sind.

## Patentansprüche

1. Wagenkasten, insbesondere für Personenkraftwagen, bei dem ein vorderer Längsträger der Aufbaustruktur unter Vermittlung eines Verbindungselementes an einen außenliegenden Schweller angeschlossen ist, wobei der vordere Längsträger und der Schweller durch Strangpreßprofile und das Verbindungselement durch ein Gußteil gebildet werden und vorzugsweise aus Leichtmetall hergestellt sind, **dadurch gekennzeichnet**, daß das Verbindungselement aus einem ersten und einem zweiten Knotenelement (6, 14) gebildet wird, daß der vordere Längsträger (5) endseitig von dem ersten sich in Fahrzeuglängsrichtung erstreckenden schuhförmigen Knotenelement (6) aufgenommen ist, wogegen der Schweller (10) endseitig mit dem im wesentlichen quer zur Fahrzeuglängsrichtung ausgerichteten, zweiten Knotenelement zusammenwirkt, wobei das zweite Knotenelement (14) ferner an den Boden (12) und den Mitteltunnel (11) der Aufbaustruktur angeschlossen ist und daß das erste Knotenelement (6) in eine korrespondierende Aufnahme (15) des zweiten Knotenelementes (14) eingesetzt ist und daß eine zusätzliche Verbindung zwischen den beiden Knotenelementen (6, 14) vorgesehen ist.

2. Wagenkasten nach Anspruch 1, **dadurch gekennzeichnet**, daß der vordere Längsträger (5) mit dem endseitigen ersten Knotenelement (6) einem vorgefertigten Vorderwagen (2) zugeordnet ist, wogegen die vorgefertigte Baueinheit Schweller (10), Boden (12), Mitteltunnel (11) und zweites Knotenelement (14) ein Boden- oder Mittelteil (3) des Personenkraftwagens bildet.

3. Wagenkasten nach Anspruch 1, **dadurch gekennzeichnet**, daß das schuhförmige erste Knotenelement (6) einen hinteren Endbereich des vorderen Längsträgers (5) umschließt und örtlich fest mit diesem verbunden ist.

4. Wagenkasten nach den Ansprüchen 1 und 3, **dadurch gekennzeichnet**, daß die Verbindung des vorderen Längsträgers (5) mit dem ersten Knotenelement (6) durch Schrauben, Nieten, Schweißen, Kleben oder dgl. erfolgt.

5. Wagenkasten nach Anspruch 1, **dadurch gekennzeichnet**, daß das erste Knotenelement (6) den vorderen Längsträger (5) von unten, von hinten und von beiden Längsseiten her abschnittsweise formschlüssig umgreift.

6. Wagenkasten nach Anspruch 1, **dadurch gekennzeichnet**, daß die beiden Knotenelemente (6, 14) im Bereich der etwa rinnenförmigen Aufnahme (15) zusätzlich durch eine vertikal ausgerichtete Befestigungsschraube miteinander verbunden sind, wobei mit der Befestigungsschraube ein querverlaufender Getriebeträger von unten gegen das zweite Knotenelement (14) gespannt wird.

7. Wagenkasten nach Anspruch 6, **dadurch gekennzeichnet**, daß die Befestigungsschraube von unten durch eine Durchgangsöffnung (41) des zweiten Knotenelementes (14) hindurchgeführt und in eine Gewindebohrung (42) des ersten Knotenelementes (6) eingedreht ist.

8. Wagenkasten nach Anspruch 1, d**adurch gekennzeichnet**, daß das zweite Knotenelement (14) in einen mittleren Bereich seiner Quererstreckung eine nach vorne und oben hin offene rinnenförmige, längsgerichtete Aufnahme (15) aufweist, von der aus beiderseits schrägverlaufende, aufrechte Wandabschnitte (18, 19) weggeführt sind, wobei der dem außenliegenden Schweller (10) zugekehrte Wandabschnitt (19) in eine den Schweller verschließende Querwand (20) übergeht.

9. Wagenkasten nach Anspruch 1, **dadurch gekennzeichnet**, daß am zweiten Knotenelement (14) ein nischenförmiger Aufnahmeraum (22) für eine Gewindeplatte vorgesehen ist, der in Höhenrichtung von zwei beabstandeten horizontalen Stegen (23, 24) begrenzt wird, wobei an der einsetzbaren Gewindeplatte ein unterhalb des zweiten Knotenelementes angeordneter Querlenker befestigbar ist.

10. Wagenkasten nach Anspruch 1, **dadurch gekennzeichnet**, daß an einem Fußraumabschnitt (26) des zweiten Knotenelements (14) ein Pedal oder eine Pedallerie befestigbar ist.

11. Wagenkasten nach Anspruch 1, **dadurch gekennzeichnet**, daß das zweite Knotenelement (14) auf der dem Mitteltunnel (11) zugekehrten Seite einen U-förmigen Rand (29) aufweist, der einen Hohlprofilabschnitt (30) des Mitteltunnels (11) umschließt, wobei eine zusätzliche Verbindung zwischen Rand (29) und Hohlprofilabschnitt (30) vorgesehen ist.

12. Wagenkasten nach Anspruch 1, **dadurch gekennzeichnet**, daß ein doppelwandiger Boden (12) mit örtlich angeordneten längsgerichteten Stegen (31) an das zweite Knotenelement (14) angeschlossen ist.

13. Wagenkasten nach Anspruch 1, dadurch gekennzeichnet, daß an einem vertikal abgestellten, querverlaufenden oberen Steg (40) des zweiten Knotenelementes (14) eine Stirnwand und ein Radhaus angeschlossen sind.

## Claims

1. A car body, in particular for passenger cars, in which a front longitudinal support of the body structure is attached to an external sill with the interposition of a connecting member, the front longitudinal support and the sill being formed by continuous-cast sections and the connecting member by a casting and preferably being produced from light metal, characterized in that the connecting member is formed by a first and a second junction member (6, 14), the front longitudinal support (5) is received at one end by the first, shoe-shaped Junction member (6) extending in the longitudinal direction of the vehicle, whereas the sill (10) cooperates at one end with the second junction member orientated substantially transversely to the longitudinal direction of the vehicle, the second junction member (14) being additionally attached to the base (12) and the central tunnel (11) of the body structure, and the first junction member (6) is inserted in a corresponding recess (15) in the second junction member (14) and an additional connexion is provided between the two junction members (6, 14).

2. A car body according to Claim 1, characterized in that the front longitudinal support (5) with the first junction member (6) at the end is associated with a pre-assembled forward [portion] (2) of the car, whereas the pre-assembled structural unit comprising the sill (10), the base (12), the central tunnel (11) and the second junction member (14) forms a base or middle port (3) of the passenger car.

3. A car body according to Claim 1, characterized in that the shoe-shaped first junction member (6) surrounds a rear end area of the front longitudinal support (5) and is securely connected thereto locally.

4. A car body according to Claims 1 and 3, characterized in that the front longitudinal support (5) is connected to the first junction member (6) by screwing, riveting, welding, adhesion or the like.

5. A car body according to Claim 1, characterized in that the first junction member (6) engages around the front longitudinal support (5) from below, from the rear and from both longitudinal sides with local positive locking.

6. A car body according to Claim 1, characterized in that the two junction members (6, 14) are additionally connected to each other in the region of the substantially channel-shaped receiving means (15) by a vertically orientated fastening bolt, a transversely extending gearbox support being tensioned from below against the second junction member (14) by the fastening bolt.

7. A car body according to Claim 6, characterized in that the fastening bolt is guided from below through a through opening (41) in the second junction member (14) and is screwed into a threaded bore (42) in the first junction member (6).

8. A car body according to Claim 1, characterized in that in a central area of its transverse extension the second junction member (14) has a channel-shaped, longitudinally orientated receiving means (15) which is open to the front and the top and from which obliquely extending upright wall portions (18, 19) start from both sides, the wall portion (19) towards the outer sill (10) passing into a transverse wall (20) which closes the sill.

9. A car body according to Claim 1, characterized in that a recess-shaped receiving space (22) bounded in the vertical direction by two spaced horizontal webs (23, 24) is provided on the second junction member (14) for a threaded plate, it being possible for a transverse support arm arranged below the second junction member to be secured to the insertable threaded plate.

10. A car body according to Claim 1, characterized in that a pedal or a pedal system can be secured to a foot-space portion (26) of the second junction member (14).

11. A car body according to Claim 1, characterized in that on the side facing the central tunnel (11) the second Junction member (14) has a U-shaped edge (29) surrounding a hollow-section portion (30) of the central tunnel (11), an additional connexion being provided between the edge (29) and the hollow-section portion (30).

12. A car body according to Claim 1, characterized in that a double-walled base (12) with locally arranged, longitudinally orientated webs (31) is attached to the second junction member (14).

13. A car body according to Claim 1, characterized in that a front wall and a wheel housing are attached to a vertically projecting, transversely extending upper web (40) of the second Junction member (14).

## Revendications

1. Caisse de véhicule, en particulier pour voiture de tourisme, dans laquelle un longeron avant de la structure de la carrosserie est raccordé à un seuil situé à l'extérieur, par l'intermédiaire d'un élément d'assemblage, le longeron avant et le seuil étant formés par des profilés extrudés et l'élément d'assemblage par un élément en fonte et réalisés de préférence dans un métal léger, caractérisé en ce que l'élément d'assemblage est formé par un premier gousset (6, 14), en ce que le longeron avant (5) est logé à une extrémité par le premier gousset (6) en forme de sabot, s'étendant dans la direction longitudinale du véhicule, tandis que le seuil (10) coopère par une extrémité avec le second gousset, orienté sensiblement transversalement à la direction longitudinale du véhicule, le second gousset (14) se raccordant en outre au fond (12) et au tunnel central (11) de la structure de la carrosserie et en ce que le premier gousset (6) est inséré dans un logement (15) correspondant du second gousset (14) et en ce qu'un assemblage supplémentaire est prévu entre les deux goussets (6, 14).

2. Caisse de véhicule selon la revendication 1, caractérisée en ce que le longeron (5) avant avec le premier gousset (6) terminal est associé à un avant de voiture (2) préfabriqué, tandis que le bloc préfabriqué - seuil (10), fond (12), tunnel central (11) et second gousset (14) - forme un élément de fond ou élément central (3) de la voiture de tourisme.

3. Caisse de véhicule selon la revendication 1, caractérisée en ce que le premier gousset (6) en forme de sabot entoure une zone terminale arrière du longeron (5) avant et est localement assemblé de manière fixe avec celui-ci.

4. Caisse de véhicule selon les revendications 1 et 3, caractérisée en ce que l'assemblage du longeron (5) avant avec le premier gousset (6) s'effectue au moyen de vis, rivets, par soudage, collage ou similaire.

5. Caisse de véhicule selon la revendication 1, caractérisée en ce que le premier gousset (6) entoure en partie, par concordance de forme, le longeron (5) avant, à partir du bas, de l'arrière et des deux grands côtés.

6. Caisse de véhicule selon la revendication 1, caractérisée en ce que les deux goussets (6, 14) sont, en outre, assemblés entre eux dans la zone du logement (15) à peu près en forme de rigole, par une vis de fixation orientée verticalement, un support de transmission s'étendant transversalement étant serré à partir du bas contre le second gousset (14), au moyen de la vis de fixation.

7. Caisse de véhicule selon la revendication 6, caractérisée en ce que la vis de fixation traverse, à partir du bas, une ouverture de passage (41) du second gousset (14) et est vissée dans un trou taraudé (42) du premier gousset (6).

8. Caisse de véhicule selon la revendication 1, caractérisée en ce que le second gousset (14) présente, dans une zone centrale de son extension transversale, un logement (15) orienté longitudinalement, en forme de rigole ouverte vers l'avant et vers le haut, à partir duquel partent des deux côtés, des parties de paroi (18, 19) dressées, s'étendant obliquement, la partie de paroi (19), tournée vers le seuil (10) extérieur, se prolongeant dans une paroi transversale (20) fermant le seuil.

9. Caisse de véhicule selon la revendication 1, caractérisée en ce qu'il est prévu sur le second gousset (14), un volume de logement (22) en forme de niche pour une plaque filetée, lequel est limité en hauteur par deux cloisons (23, 24) horizontales, espacées, un bras oscillant transversal, situé au-dessous du second gousset, pouvant être fixé sur la plaque filetée à insérer.

10. Caisse de véhicule selon la revendication 1, caractérisée en ce qu'une pédale ou un mécanisme à pédale peut être fixé sur une partie (26) de l'espace prévu pour les pieds, du second gousset (14).

11. Caisse de véhicule selon la revendication 1, caractérisée en ce que le second gousset (14) présente, sur le côté tourné vers le tunnel central (11), un bord (29) en U qui entoure une partie profilée creuse (30) du tunnel central (11), une liaison supplémentaire étant prévue entre le bord (29) et la partie profilée creuse (30).

12. Caisse de véhicule selon la revendication 1, caractérisée en ce qu'un fond (12) à double paroi est raccordé à des cloisons (31), orientées longitudinalement et prévues localement, sur le second gousset (14).

13. Caisse de véhicule selon la revendication 1, caractérisée en ce qu'une paroi frontale et un logement de roue sont raccordés à une cloison (40) supérieure, s'étendant transversalement, placée verticalement, du second gousset (14).
